Europäisches Patentamt

European Patent Office

Office européen des brevets

(11) Publication number: 0 188 305
A2

# (12) EUROPEAN PATENT APPLICATION

(21) Application number: 86200105.4

(22) Date of filing: 17.12.81

(51) Int. Cl.⁴: C 21 C 5/38
C 04 B 18/14, C 02 F 11/00
B 09 B 3/00

(30) Priority: 18.12.80 NL 8006884

(43) Date of publication of application:
23.07.86 Bulletin 86/30

(84) Designated Contracting States:
AT BE CH DE FR GB IT LI LU NL SE

(60) Publication number of the earlier application
in accordance with Art. 76 EPC: 0 055 004

(71) Applicant: PELT & HOOYKAAS B.V.
1 Bijlstraat
NL-3087 AA Rotterdam(NL)

(72) Inventor: Hooykaas, Carel Willem Jan
44, Oranjelaan
NL-3062 BT Rotterdam(NL)

(74) Representative: van der Veken, Johannes
Adriaan et al,
EXTERPATENT Willem Witsenplein 4
NL-2596 BK 's-Gravenhage(NL)

(54) A process for processing a moist metal or metal compounds containing composition comprising at least on solid product separated from gases evolved during the preparation of iron.

(57) A waste sludge as obtained from gases evolved during steel preparation in converters by blowing oxygen through said liquid steel is mixed with fly ash thereby forming particulate material.

Preferably the final products contain 25 - 35% of fly ash and at most 5% of a curing activator.

The hardness of the particles may be improved by moistening the surface of the particles with water.

EP 0 188 305 A2

Croydon Printing Company Ltd.

0188305

A process for processing a moist metal or metal compounds
containing composition comprising at least one solid product
separated from gases evolved during the preparation of iron.

This application relates to subject matter divided out
from European patent application 81.201.383.7.

The invention relates to a process for processing a moist
metal or metal compounds containing composition comprising
at least one solid product separated from gases evolved
during the preparation of iron in iron converters by mixing
said composition with a compound for forming particulate
material.

At least in the production of steel by blowing oxygen in
molten iron and adding calciumoxide gases are evolved with
products which are removed in a moist washing device and
recovered in a precipitation tank or on a filter in order to
avoid environmental pollution due to these products.

In the past it was possible to recycle the separated products
to the blast furnaces wherein iron ore is used. Due to zinc
as now being present in the starting iron ore pellets, it is
impossible to recycle the high amount of ironoxide containing
separated product to the blast furnace as this would lead to unacceptable high zinc concentrations in the blast furnaces.
This causes difficulties as zinc evaporates and precipitates
on to controlling apparatus and valves as used in the automatized blast furnaces so that the working of the blast
furnaces is impaired.

On the other hand, this product being also known under the
name "oxysludge" is difficult to handle due to its stickiness
after removal of water in an amount as high as possible by
means of a vacuum filter so that this product cannot be used
for valuable application.

It has been tried to overcome this disadvantage by adding
calciumoxide in order to obtain a product which can be handled
more easily as disclosed in GB-A 1 017 424.

However, the addition of calcium oxide is relatively expensive in comparison with the value of the product as obtained in the form of oxysludge, whilst moreover, the substance being present in the sludge after this treatment may still be easily lixiviated, so that storage in open air is impossible.

The invention now aims to provide a simpler solution for processing such compositions without using calciumoxide. This aim is attained in that the composition is mixed with a compound presenting puzzolanic properties. By mixing a sticky sludge with a compound presenting puzzolanic properties, particularly fly ash, spheres of the sludge coated with a skin of a compound presenting puzzolanic properties are obtained during mixing of the mass.

It will be obvious that in this way a composition is obtained which is easy to handle and process, as the original sticky mass has lost its sticky properties.

It has been found that a very appropriate product is obtained by mixing the composition with 10% fly ash, more particularly 15% fly ash.

Particularly by adding 35%, preferably 30% of fly ash a dry mass is obtained, which is very good processable.

Moistening a product containing 30% of fly ash, provides a non-tacky mixture which is transformed into a hard material and can then be broken into smaller particles. The formation of a hard material is due to the presence of the compound presenting puzzolanic properties.

It is to be noted that solid leach resistant bodies may be formed by mixing aqueous metal sludges with fly ash obtained by burning coal.

Such a process is known from US-A 4 226 630 wherein solid leach resistant bodies are formed by mixing in one step aqueous metal sludges with fly ash obtained by burning coal, such fly ash is a compound presenting puzzolanic properties.

This process presents the disadvantage that mixing requires the step of forming a slurry of the metal sludge, fly ash and water and secondly the process provides large bodies of set material which bodies would have to be broken in order to obtain more easily handable particles. Moreover, noxious metals are rather rapidly extracted from particles obtained by breaking said large bodies.

The same disadvantage apply to the process disclosed in GB-A 4 116 705 4 116 705 wherein a heavy metal sludge is mixed with cement and aluminosilicate, preferably fly ash, by forming a flowable aqueous slurry which sets into a rigid rock like mass. The metal sludge may be waste obtained from melting and metal refining industry wastes and iron and steel industry wastes. Preferably a hydroxide of iron is added to the sludge.

A composition processed according to the invention is particularly suitable as material in road construction or for sound insulation and moreover, as additive in concrete, particularly heavy concrete. This is due to the high iron content of the "oxysludge".

Using said composition in concrete provides the additional advantage that less mortar and water are required in order to obtain a mortar providing a good concrete quality.

Another use of the composition as obtained by means of the invention is as filler material in road construction.

Advantageously, the composition may contain to 5% of a hydraulic agent or of an curing activator activating the curing of the compound presenting puzzolanic properties, thus providing rapidly a hard product, which will gradually become harder, due to the presence of the compound presenting puzzolanic properties. Such an activator may be cement, calciumchloride, sodium-chloride or calciumoxide.

The amount of compound presenting puzzolanic properties should preferably not bind more than 35% of water as otherwise a doughlike mass is obtained, which is not appropriately processable.

The invention will be illustrated by some non limitative examples.

EXAMPLE I
In a Linde Donauwitz converter oxisteel is prepared by blowing oxygen into a liquid iron composition, calciumoxide being added to the iron composition. In this treatment gases with dust particles and vaporized metals and vaporized metal compounds evolve from the converter, which gases are washed in a moist washing device and subsequently recovered on a filter. This filter is connected with a vacuum filter for recovering the tacky oxisludge containing an amount of water as small as possible. This tacky product containing 25% of water has the following composition:

$Fe_2O_3$: 75% by weight; $SiO_2$: 2% b.w.; Zr: 0,4% b.w.
CaO: 10% b.w.

Notwithstanding the high amounts of ironoxide being present this oxisludge cannot be added to raw iron oxide to be treated in a blast furnace, as this would lead to zinc accumulation in the blast furnace. Such a high zinc concentration would involve that zinc would evaporate and precipitate on to many controlling and measuring devices and valves and thus, the working of the blast furnace would be impaired.

100 kg of the tacky, retained vaporized product is mixed with 30 kg fly ash obtained by combustion of powdered coal and said fly ash is recovered on a moist filter.

Spheres, having a size of 1 to 2 cm diameter, which are no longer tacky and thus appropriately processable, are obtained by stirring.

By spraying water over thes spheres, rather hard spheres are obtained, which can be used in road construction.

EXAMPLE II

100 kg of a tacky oxisludge is mixed with 30 kg of dry fly ash and the mixture is intensively stirred, thereby forming a dry mass.

Water is sprayed on to the obtained dry mass and thereby is obtained a non-tacky product. Drying provides a hard material which can be used as road construction material, as filler material in road construction and for forming sound insulation walls and similar applications.

EXAMPLE III

100 kg of oxisludge, is mixed with 30 kg of fly ash and 5% of Portland-cement, the mixture is stirred.
Moistening and drying of the mass provides a mass presenting properties of heavy concrete.

# C L A I M S

1.     A process for processing a moist metal or metal compounds containing composition comprising at least one solid product separated from gases evolved during the preparation of iron in iron converters by mixing said composition with a compound for forming particulate material, characterized in that the composition is mixed with a compound presenting puzzolanic properties.

2.     A process according to claim 1, characterized in that at least 10% preferably more than 15% of the compound presenting puzzolanic properties is present in the end product.

3.     Process according to claim 1 or 2, characterized in that 25 to 35% of the compound presenting puzzolanic properties is present in the end product.

4.     A process according to claim 1-3, characterized in that at most 5% of a curing activator is added to the composition.

5.     A process according to claim 1-4, characterized in that, the compound presenting puzzolanic properties is fly ash.

6.     Process according to claim 1-5, characterized in that at least 10% preferably more than 15% of the compound presenting puzzolanic properties is present in the end product.

7.     Process according to claim 1-6, characterized in that 25 to 35% of the compound presenting puzzolanic properties is present in the end product.

8.     A process as claimed in one or more of the preceding claims characterized in that water is sprayed onto the
sphere like particles as obtained formed in the second step.

-----